# EUROPEAN PATENT SPECIFICATION

(11) **EP 3 088 340 B1**
(45) Date of publication and mention of the grant of the patent: **12.02.2020**
(21) Application number: 16020160.4
(22) Date of filing: 26.04.2016
(51) Int. Cl.: B07C 5/36, G01G 19/03, B65H 39/10, B65H 29/16, B65H 29/18, B65H 31/02, B65H 31/24, B65H 43/06, B65H 43/00, B65H 43/08, G01G 19/42

(54) **SYSTEM FOR AUTOMATIC PACKING OF MAGAZINES AND NEWSPAPERS FOR EACH INDIVIDUAL NEWSAGENT**
SYSTEM ZUM AUTOMATISCHEN SAMMELN PACKUNG VON MAGAZINEN UND ZEITUNGEN FÜR JEDEN EINZELNEN ZEITUNGSHÄNDLER
SYSTÈME DE COLLECTION AUTOMATIQUE DE MAGAZINES ET DE JOURNAUX POUR CHAQUE MARCHAND DE JOURNAUX

(30) Priority: 29.04.2015 IT AN20150058
(43) Date of publication of application: 02.11.2016
(73) Proprietor: Klotzner, Stefan, 39100 Bolzano (IT); Romani, Daniele, 39100 Bolzano (IT)
(72) Inventor: Klotzner, Stefan, 39100 Bolzano (IT); Romani, Daniele, 39100 Bolzano (IT)
(74) Representative: Primiceri, Maria Vittoria

(56) References cited:
- WO-A1-2005/075116
- DE-A1- 19 753 627
- JP-A- S 571 114
- JP-A- 2013 034 972
- JP-B2- 3 606 818
- JP-B2- 3 699 818

## Description

### Field of Invention

The present invention concerns a system that can automate the process of packing the bundles of each publishing product for the distribution of magazines and newspapers to individual newsagent's shops.

### Background of the Invention

It is known that, for the distribution of publishing products, publishing houses use special distribution agencies located in certain areas of the country, to which these products are delivered to then be distributed by them to the newsagent's shops situated in their geographical area.

In the state of the art, it is known that the packing of publishing products to be delivered to individual newsagent's shops is carried out manually by workers who are helped by luminous displays that indicate the quantities of each magazine or newspaper that must be distributed and delivered to each newsagent's.

Using a reader, the operator reads the bar code of the magazine or newspaper that, by connecting to a computer, shows on luminous displays the number of copies for that specific magazine or newspaper that must reach each newsagent's. Then the operator manually counts the magazines and puts them in the box situated under the relevant display. This manual operation must be repeated for all the magazines or newspapers to be delivered to each newsagent's and requires a considerable financial commitment from the publishing product distribution agencies because of the large number of operators that must work on this line and also poses a high probability of mistakes being made in the distribution or the packing of the publishing products to be delivered to each individual reseller.

In the state of the art, as regards the manual packing of publishing products to be distributed, it is known the patent JP3606818 B2 which discloses a collating device for commodities capable of improving the efficiency when a computer collates books inputted one by one by an upstream worker with the described content on a receipt of ordered sheet, and a downstream worker collects the collated books for dispatching.

Also known is the trade practice by which unsold publishing products are returned to their respective publishing houses by being sent back to the relevant distribution agencies, which must calculate for each reseller the number of copies for each returned publishing product and credit the relevant sum to the reseller's account.

At present, all these operations are carried out automatically by machines, called "return machines", that have an infeed belt on which the publishing products to be returned, previously given a bar code, are individually placed and spaced out from each other to then be put into a module for reading their codes, by means of which they are identified, credited to each individual reseller and sorted to the publisher by further known instruments with which the current publishing product return systems are equipped.

In the state of the art the following patents are known in the sector of unsold publishing product return:
- EP0597784 A1 which discloses a line that permits the recognition and separation of unsold copies to be sorted and those to be destroyed.
- EP0887121 A1 which discloses an unpackaging station for the unsold articles or magazines.
- JP2004256226A which discloses a sorting facility for returned books capable of accurately inspecting and sorting returned books.

It follows that, if for returning and new crediting of unsold publishing products by individual newsagent's shops to the agencies and by these to the publishing houses, there are systems enabling complete automation of these operations, there is nothing in the state of the art concerning the operation of delivering the various publishing products by the distribution agencies to the individual resellers, other than using a large number of employees whose costs burden the newspaper publishing sector that is currently having problems due to competition from new communication tools such as the Internet.

Furthermore, the current system of packing and distributing publishing products by area agencies to the various newsagent's shops located in their area also poses the problem of human errors occurring, which cause a further waste of time and additional costs.

JP3606818B2 discloses a system for sorting and collating returned magazines.

JPS57-1114 A discloses a system for automatic packing of newspapers bundles.

WO 2005/075116 A1 and JP3699818 B2 disclose each a postal sorting machine.

DE 197 53 627 A1 discloses a scale which is installed on a conveyor belt and checks the number of newspapers present in a bundle by its weight.

### Disclosure of the Invention

It is an object of the present invention to overcome the above-described problems by making an automatic system for the packing of the bundles of the various publishing products to be delivered to each individual newsagent's in order to reduce the use of labour and their delivery times and, consequently, the running costs.

It is another object of the present invention to make a system for automatic packing of magazines and newspapers so as to eliminate or, in any case reduce to a minimum, the occurrence of human errors that are usually found in the carrying out of the said processing of publishing products.

It is another object of the present invention to make a system for automatic packing of magazines and newspapers that will allow very efficient and rapid distribution of copies.

It is another object of the present invention to ensure certain control on the manual work load during transport, by giving a certain limit to the weight of the baskets.

### Brief description of the drawings

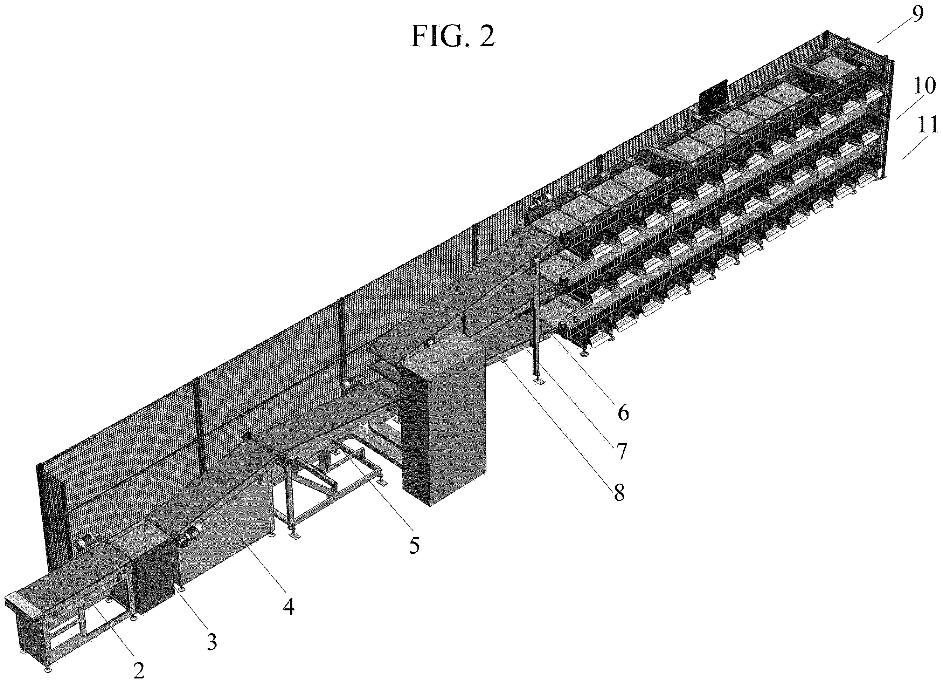

Further features and advantages of the invention will be apparent from the description of a preferred, but not exclusive, embodiment of the system for automatic packing of magazines and newspapers that is the subject of the present patent application, illustrated by way of non-limiting example in the drawing units in which:

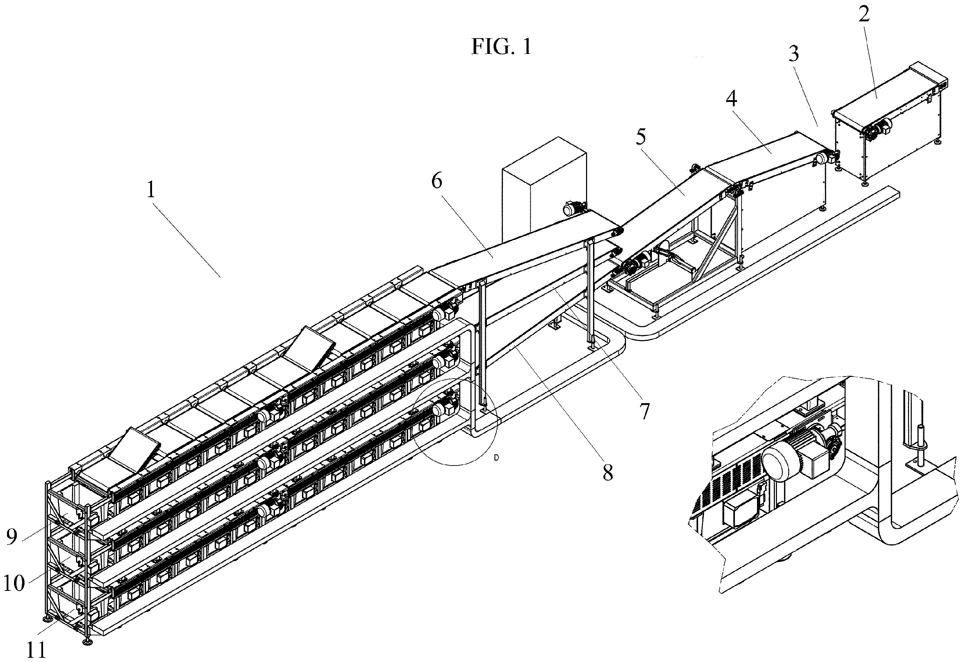

- Fig. 1 shows an axonometric view of a magazine and newspaper packing system (1) and an enlarged detail, the said system (1) consisting of:
   - an infeed module (2);
   - a scale (3) that can be seen in Fig. 2;
   - a module for division by amounts made up of five conveyor belts:
      - first conveyor belt (4)
      - second tilting conveyor belt (5)
      - third conveyor belt (6)
      - fourth conveyor belt (7)
      - fifth conveyor belt (8);
   - a sorting module made up of three lines of tilting sorters each with twelve outlets:
      - first sorting line (9)
      - second sorting line (10)
      - third sorting line (11);
   - a central management personal computer (not shown);
   - a system with programmable control logic (not shown);
   - a central computer system (not shown);
- Fig. 2 shows an axonometric view of a system (1);

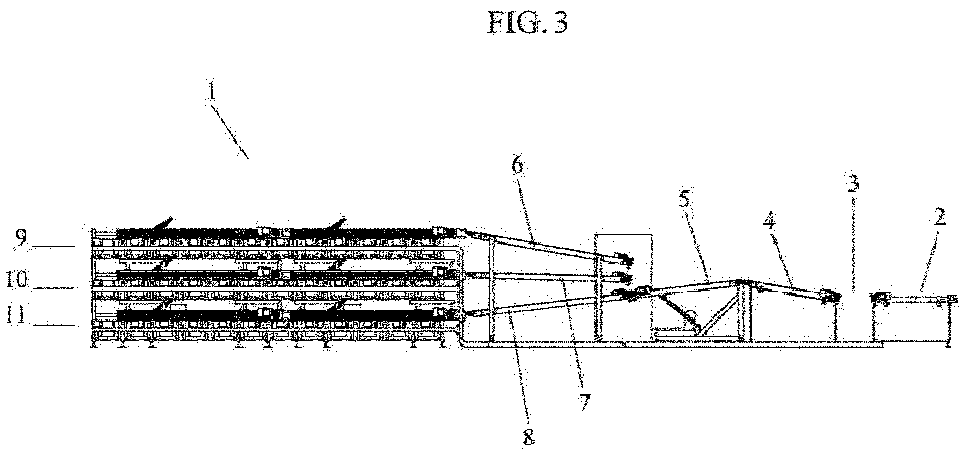

- Fig. 3 shows a front view of a system (1);

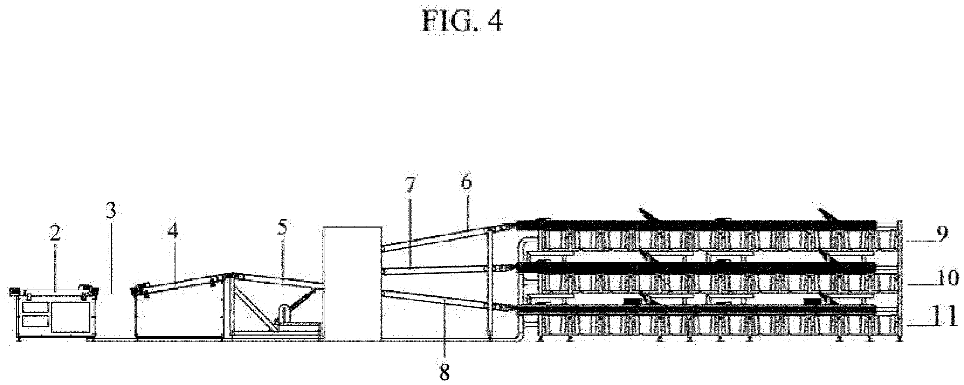

- Fig. 4 shows another front view of a system (1);

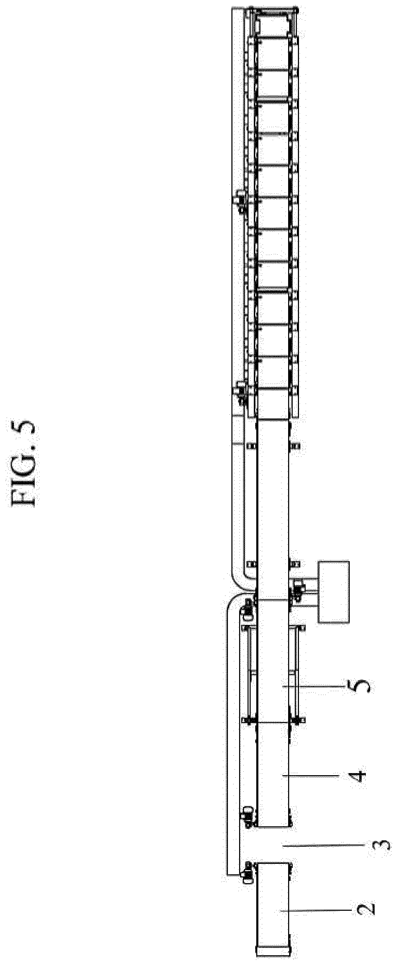

- Fig. 5 shows a view from above of a system (1);

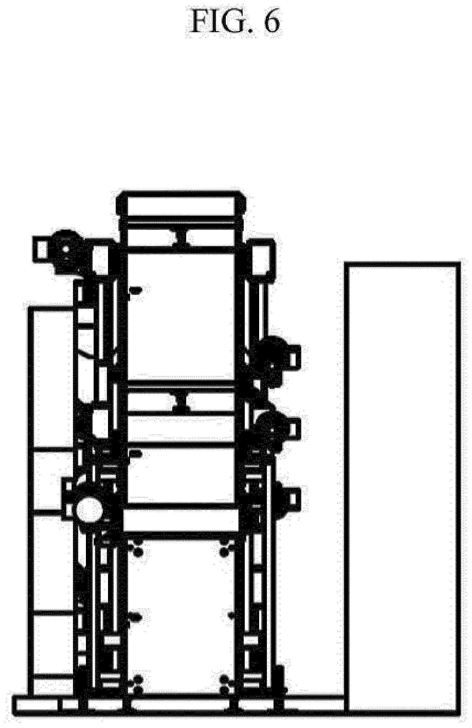

- Fig. 6 shows a side view of a system (1);

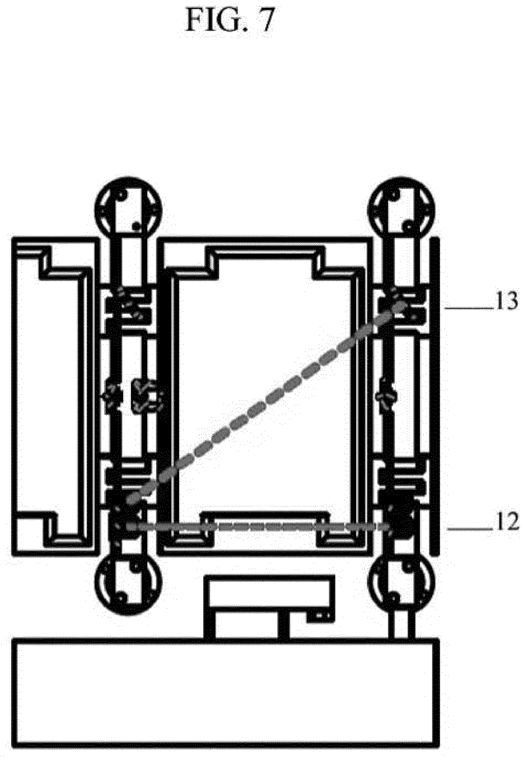

- Fig. 7 shows the detail of a photocell (12) for checking that the box for collecting the copies is present and a photocell (13) positioned flush with the upper edge of the box for checking that the box is full;

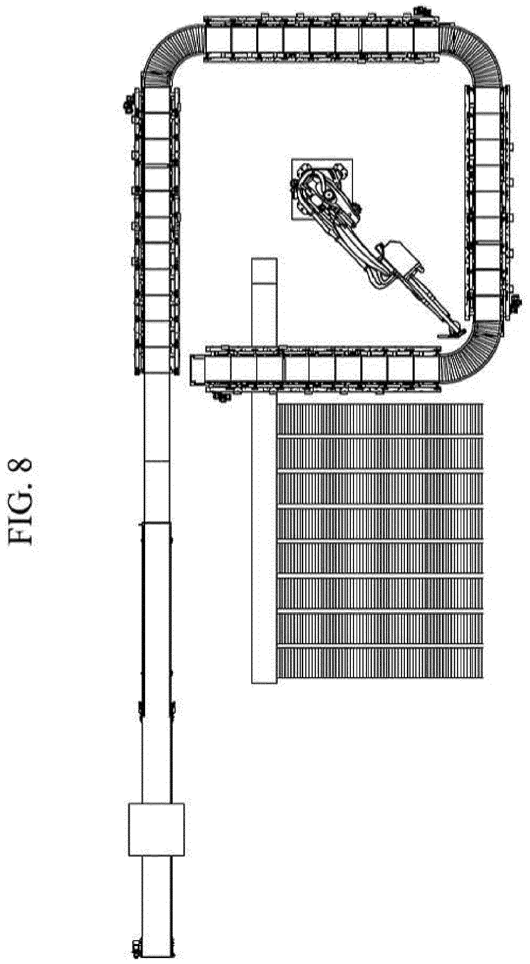

- Fig. 8 shows a view from above of an alternative embodiment of the system (1) in which the development is circular instead of linear;

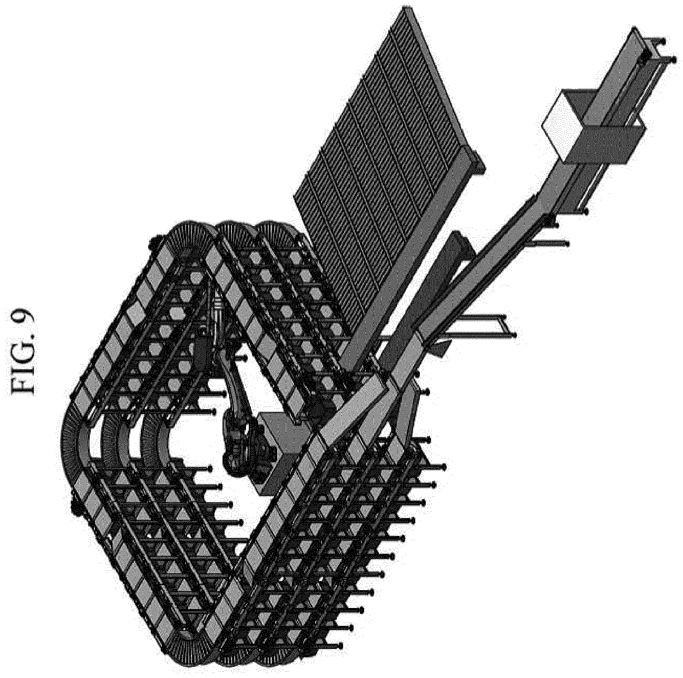

- Fig. 9 shows an axonometric view of the alternative embodiment with circular development of the system (1).

### Detailed description of the Invention

According to a preferred - but non-limiting - embodiment, the present invention concerns a system (1) for automatic packing of magazines and newspapers consisting of:
- an infeed module (2);
- a scale (3);
- a module for division by amounts made up of five conveyor belts:
   - first conveyor belt (4)
   - second tilting conveyor belt (5)
   - third conveyor belt (6)
   - fourth conveyor belt (7)
   - fifth conveyor belt (8);
- a sorting module made up of three lines of tilting sorters each with twelve outlets:
   - first line of sorters (9)
   - second line of sorters (10)
   - third line of sorters (11);
- a central management personal computer (not shown);
- a system with programmable control logic (not shown);
- a central computer system (not shown);
the said system (1) being able to automate the process of packing the bundles of magazines of the magazines and newspapers to be delivered by the distribution agencies to each point of sale situated in their geographical area. The entire system (1) is managed by a central management personal computer and a system with programmable control logic (both not shown).

The central management personal computer is connected to the central computer system (not shown) and exchanges information with a system with programmable control logic via network.

At the start of the packing work, an operator must place the boxes, in which the newspapers and magazines will be collected, next to each of the twelve outlets of the first line of sorters (9), the second line of sorters (10) and the third line of sorters (11); the said boxes will be positioned with their long side crosswise to the direction of travel. Boxes with the following dimensions in mm are envisaged: L=600 D=400 H=300.

The outlets (hereinafter called pigeon-holes) of each line of sorters (9, 10, 11) are unequivocally identified by a label clearly containing the progressive number of each pigeon-hole in a suitable position.

In addition to the label, in each pigeon-hole there are two photocells (12, 13) connected to the system with programmable control logic, which are used to check respectively that the box is present and that it is full.

A pigeon-hole without box cannot be used; if it is without, the system with programmable control logic informs the central management personal computer that then warns the operator who will take appropriate action. Once the preliminary operations have been completed, packing can be started by working on the central management personal computer through special software that converses with the system with programmable control logic and, at the time of starting, exchanges with it all the initial working parameters according to the communication protocol between the two, including the grid for positioning the newsagent's shops on the lines of sorters (9, 10, 11).

The system with programmable control logic needs to be told the pigeon-hole-newsagent's combination according to what has been decided by the distribution manager.

The circulation task is in fact given to the distribution manager who, in an office, on the basis of statistics and market research, decides the number of copies that, for each magazine, must reach a newsagent's. When the operator reads the bar code of the magazine with a reader, the number of copies chosen by the distribution manager is displayed on the monitor of the central management personal computer. Over the following days, the number of copies to send to a newsagent's will be adjusted according to the number of returns.

It is also necessary to know the newsagent's shops present on each level of the lines of sorters (9, 10, 11) that make up the system (1), because the application software must optimize the distribution according to the "turnover" of the bundle in proportion to the newsagent's shops present on each level as well as the height, which must not exceed the maximum allowed height.

If the height of the bundle of copies envisaged as supply for a newsagent's exceeds the allowed height, the bundle must be divided into two parts. The first is processed at once, while the remaining part is inserted at the end of the distribution on its level. These checks and activities are carried out automatically by the software of the central management personal computer. The infeed module (2) is placed at the start of the system (1) and consists of a powered conveyor belt onto which the publications to be distributed are fed. The length of this module is 1520 mm. The worker places the loose copies and/or bundles to be delivered for each publication to each newsagent's on the said powered conveyor belt.

The said conveyor belt is followed by a scale (3) whose function is to weigh each bundle positioned on it and send its weight to the system with programmable control logic, in order to check whether the number of copies to be sent to a newsagent's is actually the correct one.

The operator positions the copies on the infeed module (2) according to what is displayed on the monitor of the central management personal computer. The operator reads the bar code of the magazine with a reader, after which the number of copies of that magazine that a newsagent's must receive will be displayed on the monitor of the central management personal computer. Therefore, the individual copy or the bundle of copies is placed on the infeed module (2) and reaches the scale (3), which is installed on a conveyor belt and checks the number of copies present in the bundle by its weight.

In reality, the scale (3) tells the weight to the system with programmable control logic through a communication protocol; the system with programmable control logic stores the weight found by the scale (3) together with the code of the relevant newsagent's and makes this information available to the central management personal computer that stores it in a file for possible subsequent checks especially in the case of complaints by newsagent's shops. The conveyor belt on which the scale (3) rests is not stopped.

At the entrance to the scale (3), there is an infeed photocell that communicates the arrival of the bundle to be weighed to the system with programmable control logic and to the scale (3) itself.

Before the bundle engages the infeed photocell, the system with programmable control logic must know the newsagent's it is to go to; if it does not have this information, the infeed module (2) stops.

The infeed photocell envisaged at the entrance to the scale (3) is also used by the system with programmable control logic to check the length of the bundle or the individual copy; if the length exceeds 40 cm, the bundle is stopped with a warning.

The scale (3) begins to weigh when the bundle stops engaging the infeed photocell (trailing edge).

At the end of the scale (3), there is an outfeed photocell whose function is to communicate that the bundle has left to the system with programmable control logic and to the scale (3).

The scale (3) stops weighing, and sends the weight found, when the bundle or the individual magazine engages the outfeed photocell.

A new bundle to weigh can be allowed onto the scale (3) when the previously weighed bundle begins to engage the outfeed photocell. Furthermore, the bundle to be weighed must not come onto the scale (3) completely before the weighed bundle has left the outfeed photocell.

This ensures that the rate at which information regarding the copies to be taken for each individual bundle appears on the video display of the central management personal computer is in pace with the infeed and outfeed photocells.

The conveyor belt present on the scale (3) has a running speed of about 30 m/min and is about 600 mm long, with the consequence that a bundle takes 1.2 sec to go along the said belt.

This time is therefore the rate at which the bundles are fed into the infeed module (2).

The scale (3) is followed by the module for division by amounts made up of a system of five conveyor belts:
- first conveyor belt (4)
- second tilting conveyor belt (5)
- third conveyor belt (6)
- fourth conveyor belt (7)
- fifth conveyor belt (8).

The said conveyor belts are located on different levels in order to keep down the longitudinal dimensions of the system.

The conveyor belts (6, 8) of the module for division by amounts have a 10° slope. The conveyor belts (6), (7) and (8) of the module for division by amounts take the publications to the various levels of the lines of sorters (9, 10, 11) that make up the system (1).

Once the bundle has passed through the scale (3), it then reaches the conveyor belt (4) that is running faster than the scale (3) for a first separation of the bundles.

From the conveyor belt (4), the bundle reaches the tilting conveyor belt (5) that is running faster than (4) and directs the bundle towards the level it is to go to, that is, it takes it onto one of the conveyor belts (6), (7) or (8) until the supply of all the newsagent's shops present in the level has been completed. The computer knows where the newsagent's is positioned on the sorting level because, on the monitor of the central management personal computer, a number is linked to each newsagent's and a pigeon-hole in which the box is positioned is linked, in turn, to this number. Therefore, the computer knows which conveyor belt, (6, 7, 8), to direct the bundle to, once it has moved past the tilting conveyor belt (5).

Once they have reached the start of the level they are to go to, the publications enter the lines of sorters (9, 10, 11).

These sorting modules are made up of three lines of tilting sorters (9, 10, 11) each with twelve outlets, placed on three levels that, by opening upwards, allows the publications to fall into the boxes beneath; a point of sale corresponds to each box. The newsagent's shops are linked to nine of these twelve outlets, while the remaining three are used as all-purpose outlets.

At the start of each line of sorters (9, 10, 11) there is a photocell to allow the system with programmable control logic to resume the pace with the arriving bundles.

The running speed of the lines of sorters (9, 10, 11) is 50-60 m/min. That is why all the conveyors must be inverter controlled.

The system with programmable control logic needs to be told the number of pigeon-holes to use on each level and, consequently, the all-purpose pigeon-holes to set aside to receive the publications of a newsagent's when its current box is full, while waiting for the box to be replaced.

A full box must be replaced at once or as soon as possible, because the freed pigeon-hole becomes an all-purpose one to use when another box is full; the system stops when there are no available all-purpose pigeon-holes.

At the end of these operations and any other ones envisaged by the application software, the operator selects the publication to be distributed. In consideration of the arrangement of the newsagent's shops on each level (paper round or anything else the manager has decided), the software optimizes the sequence in which the bundles are fed in for each newsagent's by organizing them by bundle "turnover" and by height, as previously described, within each level, that is: first the copies of all the newsagent's shops of the first level, then those of the second and finally those of the third. In order to optimize the filling of the boxes by height, there are two controls: a software control based on the dimensions of the publications and managed by the central management personal computer and a hardware control, managed by the system with programmable control logic, that uses a photocell (13) positioned flush with the upper edge of the box for checking that the box is full.

The said photocell (13) is connected to the system with programmable control logic that detects the situation.

If the system with programmable control logic detects that the box is full, this is communicated to the central management personal computer, which then prints the label.

In any case, the outfeed of the copies to go to the newsagent's whose box is full is directed by the system with programmable control logic to the first all-purpose pigeon-hole available at that time; this means that, if a box for a newsagent's becomes full and at the same time the deliveries for that newsagent's are not finished, the newsagent's will move onto the first free pigeon-hole in feeding order.

The full box is removed and replaced manually.

When a box is full, the system with programmable control logic communicates the situation to the central management personal computer and sends it the position of the box and the code of the newsagent's. With a special printer, the central management personal computer prints a label, to be positioned on the box, containing the code of the newsagent's and the number of the pigeon-hole, along with other information.

The operator takes this label, places it suitably on the box and removes the box from the pigeon-hole.

When the full boxes are delivered to the newsagent's shops, a control will take place on these boxes that consists of checking how many of them return to the system after being distributed. This control operation takes place as follows:
1. a bar code is stamped on each box;
2. there is a label with a bar code on each pigeon-hole in which the box is inserted;
3. with a bar code reader, the two bar codes indicated in points 1 and 2 are linked up and, when the relevant newsagent's has been linked to each pigeon-hole, the system is able to give information on the number of boxes that the newsagent's has received and how many it has returned.

This control operation is to prevent the delivered boxes from not being returned.

The operation of placing the label on the box and its removal from the pigeon-hole, in another preferred but not exclusive embodiment of the system that is the subject of the present patent application, can take place using a robot, namely an anthropomorphic arm that can be fixed or on a rail or on three axes.

To communicate the situation on the three lines of sorters (9, 10, 11) to the operators, the use of a monitor (not shown) of suitable size, to be suitably positioned, is envisaged for displaying the status of each pigeon-hole on a grid by means of different colours. This monitor is managed by the system with programmable control logic.

For the "normal" situation, the colour will be green, for "box missing" the colour will be grey, for "box present but not linked" the colour will be blue and for "full box with printed label" the colour will be red. Obviously the colours chosen are entirely indicative.

The presence of a full box with printed label to be replaced is indicated by colouring the pigeon-hole concerned red on the monitors and operating a buzzer.

The process of packing of non-standard size publications, that is, publications that cannot go through the system because they are of a size that is not supported by the dimensions of the lines of sorters or the box, will be managed outside the system, that is, on the line for evacuating the full boxes, once the process has been automated.

Until the number of publications involved and their quantities are known with sufficient approximation, there will be a processing parallel to the main system with the use of a manual station near where the closed boxes are sorted.

The preferred embodiment of the system that is the subject of the present patent application envisages that its development is linear, that is, that all the parts of which it is made are assembled one after the other on a straight line and, if one has a large number of copies to distribute, several systems can be used parallel to each other.

In another embodiment, its development is circular, instead of being linear, if the space available for making the system is small.

The materials and dimensions as described above and illustrated in the accompanying drawings, can be of any kind according to requirements. Moreover, all the details can be replaced with other technically equivalent ones within the protective scope of the present invention, which is solely defined by the appended claims.

## Claims

1. System (1) for automatic packing of magazines and newspapers consisting of:
- an infeed module (2) which is placed at the start of the system (1) and consists of a powered conveyor belt onto which the publications to be distributed are fed;
- a scale (3) which is installed on a conveyor belt and checks the number of copies present in a bundle by its weight that is communicated to a system with programmable control logic by a communication protocol;
- a module for division by amounts which is after the scale (3) and made up of five conveyor belts located on different levels:
- first conveyor belt (4) ;
- second tilting conveyor belt (5) ;
- third conveyor belt (6) having a 10° slope;
- fourth conveyor belt (7) ;
- fifth conveyor belt (8) having a 10° slope;
- a sorting module made up of three lines of tilting sorters each with twelve outlets:
- first line of sorters (9);
- second line of sorters (10);
- third line of sorters (11);
and placed on three levels that, by opening upwards, allow the publications taken by the five conveyor belts of the module for division by amounts to fall into boxes;
- a central management personal computer connected to a central computer system;
- a system with programmable control logic which stores the weight found by the scale (3) together with the code of the relevant newsagent's and makes this information available to the central management personal computer;
- a central computer system; said system (1) for automatic packing of magazines and newspapers being able to automate the process of packing the bundles of magazines of the magazines and newspapers to be delivered by the distribution agencies to each point of sale.

2. System (1) for automatic packing of publishing products according to claim 1 **characterized in that**, at the entrance to the scale (3), there is an infeed photocell that communicates the arrival of the bundle to be weighed to the system with programmable control logic and to the scale (3) itself.

3. System (1) for automatic packing of publishing products according to claim 1 **characterized in that**, at the end of the scale (3), there is an outfeed photocell that communicates that the bundle has left to the system with programmable control logic and to the scale (3).

4. System (1) for automatic packing of publishing products according to claims 1 and 2 **characterized in that** the infeed photocell is also used by the system with programmable control logic to check the length of the bundle or the individual copy.

5. System (1) for automatic packing of publishing products according to claim 1 **characterized in that**, in each of the twelve outlets of the three lines of tilting sorters (9, 10, 11), there are two photocells (12, 13) connected to the system with programmable control logic that check respectively that the box is present and that it is full.

## Patentansprüche

1. System (1) zum automatischen Verpacken von Zeitschriften und Zeitungen bestehend aus:
- einem Einzugsmodul (2), das am Anfang des Systems (1) angeordnet ist und aus einem angetriebenen Förderband besteht, auf das die zu verteilenden Veröffentlichungen zugeführt werden;
- einer Waage (3), die auf einem Förderband installiert ist und die Anzahl der in einem Bündel vorhandenen Kopien anhand ihres Gewichts überprüft, das über ein Kommunikationsprotokoll an ein System mit programmierbarer Steuerlogik übermittelt wird;
- einem Modul zur Teilung nach Beträgen nach der Waage (3), das aus fünf Förderbändern besteht, die sich auf verschiedenen Ebenen befinden:
- einem ersten Förderband (4);
- einem zweiten Kippförderband (5);
- einem dritten Förderband (6) mit einer Neigung von 10°;
- einem vierten Förderband (7);
- einem fünften Förderband (8) mit einer Neigung von 10°;
- einem Sortiermodul aus drei Reihen von Kippsortierern mit jeweils zwölf Ausgängen:
- einer ersten Sortierlinie (9);
- einer zweiten Sortierlinie (10);
- einer dritten Sortierlinie (11);
die auf drei Ebenen angeordnet sind, die es durch Öffnen nach oben ermöglichen, dass die Veröffentlichungen, die von den fünf Förderbändern des Moduls zur Aufteilung nach Beträgen entnommen wurden, in die Kästen fallen;
- einem Personalcomputer mit zentraler Verwaltung, der an ein zentrales Computersystem angeschlossen ist;
- ein System mit einer programmierbaren Steuerlogik, die das von der Waage (3) ermittelte Gewicht zusammen mit dem Code des jeweiligen Zeitungshändlers speichert und diese Informationen dem Personalcomputer mit der zentralen Verwaltung zur Verfügung stellt;
- einem zentralen Computersystem;
wobei das besagte System (1) zum automatischen Verpacken von Zeitschriften und Zeitungen in der Lage ist, den Prozess des Verpackens der Zeitschriften der von den Vertriebsstellen an jede Verkaufsstelle zu liefernden Zeitschriften und Zeitungen zu automatisieren.

2. System (1) zum automatischen Verpacken von Verlagsprodukten nach Anspruch 1, **dadurch gekennzeichnet, dass** am Eingang der Waage (3) eine Einspeisungs-Fotozelle vorhanden ist, die die Ankunft des zu wiegenden Bündels mit programmierbarer Steuerungslogik an das System und an die Waage (3) selbst übermittelt.

3. System (1) zum automatischen Verpacken von Verlagsprodukten nach Anspruch 1, **dadurch gekennzeichnet, dass** sich am Ende der Waage (3) eine Auslauf-Fotozelle befindet, die mitteilt, dass das Bündel mit programmierbarer Steuerlogik das System und die Waage (3) verlassen hat.

4. System (1) zum automatischen Verpacken von Verlagsprodukten nach den Ansprüchen 1 und 2, **dadurch gekennzeichnet, dass** die Einlauf-Fotozelle auch vom System mit programmierbarer Steuerlogik zur Überprüfung der Länge des Bündels oder der einzelnen Kopie verwendet wird.

5. System (1) zum automatischen Verpacken von Verlagsprodukten nach Anspruch 1, **dadurch gekennzeichnet, dass** in jedem der zwölf Auslässe der drei Reihen von Kippsortierern (9, 10, 11) zwei Fotozellen (12, 13) vorhanden sind, die mit einer programmierbaren Steuerlogik an das System angeschlossen sind, die prüft, ob die Box vorhanden und voll ist.

## Revendications

1. Système (1) pour l'emballage automatique de magazines et de journaux comprenant:
- un module d'alimentation (2) placé au début du système (1) et constitué d'un tapis roulant motorisé sur lequel les publications à distribuer sont alimentées;
- une balance (3) qui est installée sur un tapis roulant et vérifie le nombre de copies présentes dans un paquet par son poids qui est communiqué à un système avec une logique de commande programmable par un protocole de communication;
- un module de division par montants situé après la balance (3) et composé de cinq tapis roulants situés à différents niveaux :
- un premier tapis roulant (4);
- un deuxième tapis roulant inclinable (5);
- un troisième tapis roulants (6) avec une pente de 10°;
- un quatrième tapis roulant (7);
- un cinquième tapis roulant (8) avec une pente de 10°;
- un module de triage composé de trois lignes de trieurs basculants chacun avec douze sorties:
- une première ligne de trieurs (9) ;
- une deuxième ligne de trieurs (10);
- une troisième ligne de trieurs (11);
et placés sur trois niveaux qui, en s'ouvrant vers le haut, permettent aux publications prises par les cinq tapis roulants du module de division par des montants pour tomber dans les cases;
- un ordinateur personnel de gestion centrale connecté à un système informatique central;
- un système avec une logique de commande programmable qui stocke le poids trouvé par la balance (3) avec le code du marchand de journaux concerné et met ces informations à la disposition de l'ordinateur de gestion central;
- un système informatique central;
ledit système (1) pour un emballage automatique des magazines et des journaux étant en gré d'automatiser le processus d'emballage des paquets de magazines des magazines et des journaux à livrer par les agences de distribution à chaque point de vente.

2. Système (1) pour l'emballage automatique de produits de publication selon la revendication 1, **caractérisé en ce que**, à l'entrée de la balance (3), il y a une photocellule d'alimentation qui communique l'arrivée du paquet à peser au système avec une logique de commande programmable et à la balance (3) elle-même.

3. Système (1) pour l'emballage automatique de produits de publication selon la revendication 1, **caractérisé en ce que**, à la fin de la balance (3), il y a une photocellule de sortie qui communique que le paquet a été laissé au système avec une logique de commande programmable et à la balance (3).

4. Système (1) pour l'emballage automatique de produits de publication selon les revendications 1 et 2, **caractérisé en ce que** la photocellule d'alimentation est également utilisée par le système avec une logique de commande programmable pour contrôler la longueur du paquet ou de la copie individuelle.

5. Système (1) pour l'emballage automatique de produits de publication selon la revendication 1, **caractérisé en ce que**, dans chacune des douze sorties des trois lignes de trieuses basculantes (9, 10, 11), il y a deux photocellules (12, 13) connectés au système avec une logique de contrôle programmable qui vérifient respectivement que la case est présente et qu'elle est pleine.
